# EUROPÄISCHE PATENTSCHRIFT

(11) **EP 3 478 971 B1**
(45) Veröffentlichungstag und Bekanntmachung des Hinweises auf die Patenterteilung: **12.08.2020**
(21) Anmeldenummer: 17749354.1
(22) Anmeldetag: 28.06.2017
(51) Int. Cl.: F16B 12/24, F16B 13/08, F16B 13/12, F16B 41/00

(54) **SELBSTSICHERNDE BOLZENHALTEVORRICHTUNG**
SELF-SECURING BOLT-RETAINING DEVICE
DISPOSITIF DE RETENUE DE CHEVILLE AUTOBLOQUANT

(30) Priorität: 29.06.2016 DE 102016007871
(43) Veröffentlichungstag der Anmeldung: 08.05.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000187
(87) Internationale Veröffentlichungsnummer: WO 2018/001404

(56) Entgegenhaltungen:
- DE-A1-102010 051 372
- DE-U1- 29 918 363

## Beschreibung

Die Erfindung betrifft eine Bolzenhaltevorrichtung mit einer zylinderförmigen Vorrichtungs-Hüllkontur, deren Durchmesser größer ist als der Nenndurchmesser der Bolzenhaltevorrichtung, die zumindest einen Halteabschnitt und einen hierzu in der Längsrichtung der Bolzenhaltevorrichtung versetzten, mindestens einen, die Vorrichtungs-Hüllkontur tangierenden Spreizarm aufweisenden Spreizabschnitt umfasst, ein System mit zwei derartigen Bolzenhaltevorrichtungen und mit einer Bolzenbaugruppe sowie ein Möbelstück mit zwei aneinander angrenzenden Möbelstückteilen, wobei in jedem Möbelstückteil eine derartige Bolzenhaltevorrichtung eingesetzt ist.

Aus der DE 10 2010 051 372 A1 ist eine derartige Bolzenhaltevorrichtung bekannt. Das Bolzenformteil hat eine Ringnut, mit der es in der Haltevorrichtung verrastet und einen zylindrischen Bereich zum radialen Pressen mehrerer Spreizarme. Beim Setzen des Bolzenformteils wird die Bolzenhaltevorrichtung mehrfach be- und entlastet, sodass das Bolzenformteil fehlerhaft montierbar ist.

Aus der DE 299 18 363 U1 ist ein Montageelement für den Möbelbau bekannt, bei welchem ein Verbindungszapfen über als Sollbruchstelle wirkende Anbindungen mit der Befestigungshülse verbunden ist.

Der vorliegenden Erfindung liegt die Aufgabe zugrunde, eine Bolzenhaltevorrichtung zu entwickeln, die eine eindeutige Position des eingesetzten Bolzenformteils oder einer Bolzenbaugruppe sicherstellt.

Diese Problemstellung wird mit den Merkmalen des Hauptanspruches gelöst. Dazu weist die Bolzenhaltevorrichtung ein Mantelteil und eine an dessen Innenseite mittels Trennstegen angeformte Aufspreizkappe mit einer Aufspreizkappen-Hüllkontur auf. Die Aufspreizkappe umfasst eine in einer vom Halteabschnitt in Richtung des Spreizabschnitts orientierten Einschubrichtung mittels eines Deckels begrenzte Aufnahmeausnehmung. Der Nenndurchmesser der Bolzenhaltevorrichtung, verringert um die doppelte Wandstärke des Spreizabschnitts, ist kleiner als der Außendurchmesser der Aufspreizkappen-Hüllkontur. Das Mantelteil weist an seiner Innenseite mindestens ein Rastelement auf. Die in der Längsrichtung orientierte Länge der Bolzenhaltevorrichtung, vermindert um die Länge der Aufspreizkappe, ist größer als der Abstand einer in der Einschubrichtung orientierten Haltefläche des Rastelements von einer Einführöffnung der Bolzenhaltevorrichtung.

Im System mit zwei Bolzenhaltevorrichtungen sind die jeweiligen Spreizbereiche in entgegengesetzte Richtungen orientiert. Die Bolzenbaugruppe oder das Bolzenformteil weist ein mittig angeordnetes Verrastungsformteil auf. Zur Bildung eines Verbindungssystems ist die Bolzenbaugruppe oder das Bolzenformteil in beide Bolzenhaltevorrichtungen einsetzbar und fixierbar.

Das Möbelstück ist derart ausgebildet, dass die Möbelstückteile mittels eines derartigen Systems mit beidseitig verrasteter Bolzenbaugruppe oder Bolzenformteil verbunden sind.

Die Bolzenhaltevorrichtung hat ein Mantelteil und eine hieran angeformte, innenliegende Aufspreizkappe. Beim z.B. werkzeuglosen Einsetzen in eine Ausnehmung eines Möbelstückteils wird die Bolzenhaltevorrichtung in radialer Richtung verformt, sodass sie kraft- und/oder formschlüssig in der z.B. zylindrischen Ausnehmung gehalten ist. Bei der Montage des Möbelstücks werden die Möbelstückteile mittels einer Bolzenbaugruppe oder eines Bolzenformteils gefügt, die oder das in zwei Bolzenhaltevorrichtungen der aneinander angrenzenden Möbelstückteile eingeführt und verrastet wird. Beim Einführen der Bolzenbaugruppe oder des Bolzenformteils wird die Aufspreizkappe vom Mantelteil abgeschert und relativ zu diesem in der Einschubrichtung verschoben. Hierbei wird ein Spreizbereich aufgeweitet, wobei die Einschubkraft zunimmt. Kurz vor dem Erreichen der verrasteten Endlage werden Rastelemente und/oder ein Verrastungsformteil unter weiterer Zunahme der erforderlichen Montagekraft elastisch verformt. Beim Verrasten hintergreift - unter Rückverformung - das Verrastungsformteil der Bolzenbaugruppe oder des Bolzenformteils ein Rastelement der Bolzenhaltevorrichtung. Die Bolzenbaugruppe oder das Bolzenformteil wird relativ zur Bolzenhaltevorrichtung in ihre bzw. seine gesicherte, unlösbare Endposition gezogen. Die schlagartige Entlastung beim Rückverformen kann ein akustisches und/oder haptisches Signal für die korrekte Verrastung der Bolzenbaugruppe oder des Bolzenformteils geben. Weitere Einzelheiten der Erfindung ergeben sich aus den Unteransprüchen und der nachfolgenden Beschreibung schematisch dargestellter Ausführungsformen.
- Figur 1:: Isometrische Ansicht einer Bolzenhaltevorrichtung;
- Figur 2:: Isometrische Schnittdarstellung der Bolzenhaltevorrichtung aus Figur 1 entgegen der Einschubrichtung;
- Figur 3:: Isometrische Schnittdarstellung der Bolzenhaltevorrichtung aus Figur 1;
- Figur 4:: Bolzenbaugruppe;
- Figur 5:: Bolzenhaltevorrichtung mit Bolzenbaugruppe;
- Figur 6:: In Möbelstückteil eingesetzte Bolzenhaltevorrichtung mit bereichsweise eingeschobener Bolzenbaugruppe;
- Figur 7:: In Möbelstückteil eingesetzte Bolzenhaltevorrichtung mit verrasteter Bolzenbaugruppe;
- Figur 8:: Möbelstück mit Verbindungsbaugruppe;
- Figur 9:: Bolzenhaltevorrichtung mit Einzugssicherung;
- Figur 10:: Bolzenbaugruppe zum Einsatz mit der Bolzenhaltevorrichtung aus Figur 9;
- Figur 11:: In Möbelstückteil eingesetzte Bolzenhaltevorrichtung nach Figur 9 mit gesichert verrasteter Bolzenbaugruppe;
- Figur 12:: Bolzenhaltevorrichtung mit Auszugssicherung;
- Figur 13:: Bolzenbaugruppe zum Einsatz mit der Bolzenhaltevorrichtung nach Figur 12;
- Figur 14:: Möbelstück mit Verbindungsbaugruppe aus zwei Bolzenhaltevorrichtungen nach Figur 12 und einer Bolzenbaugruppe nach Figur 13.

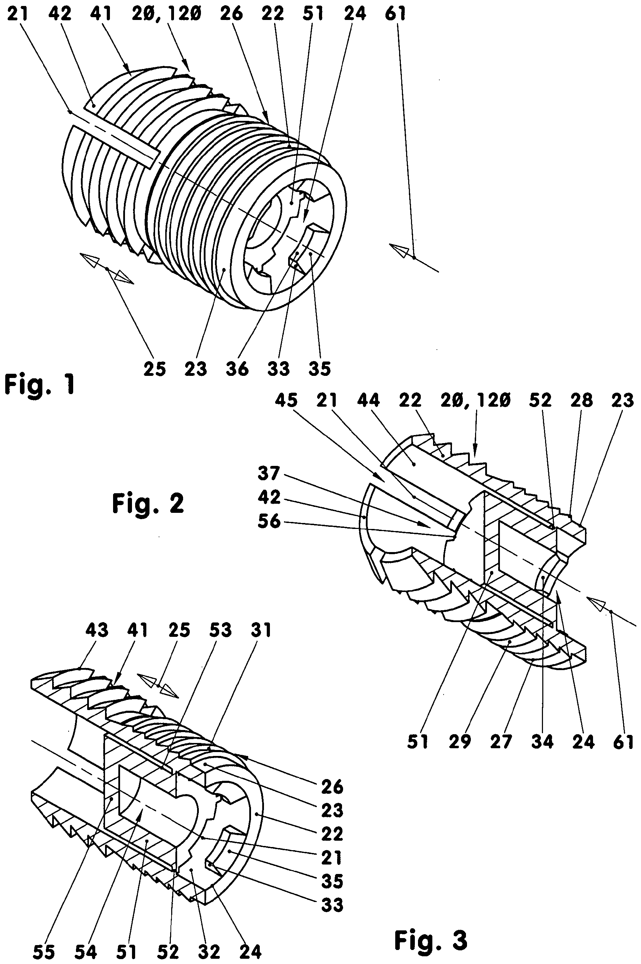

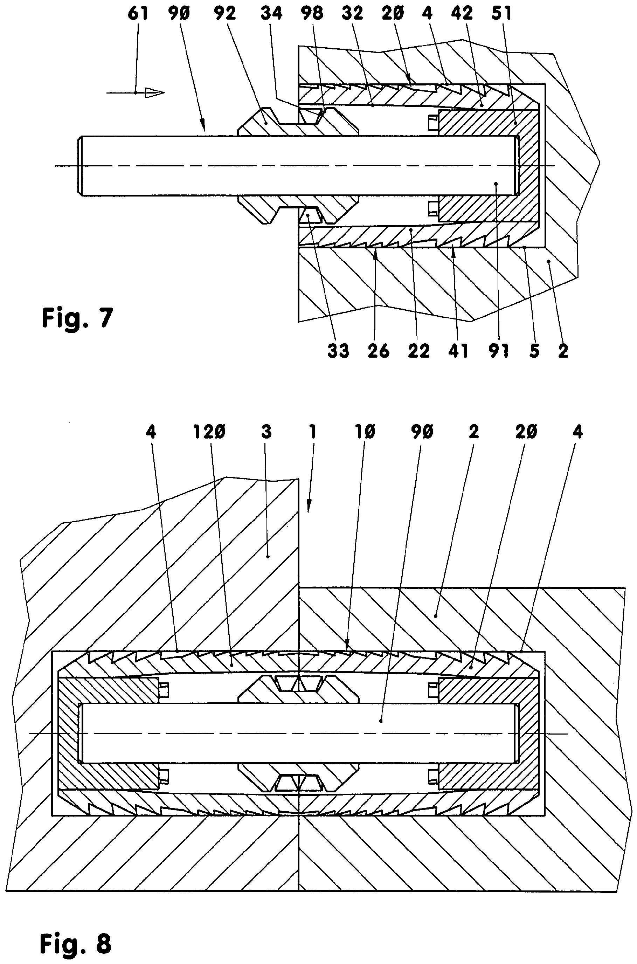

Die Figuren 1 bis 3 zeigen eine Bolzenhaltevorrichtung (20) im Ausgangszustand. Derartige Bolzenhaltevorrichtungen (20) werden beispielsweise eingesetzt, um eine Bolzenbaugruppe (90) oder ein Bolzenformteil, z.B. in der Bauart eines Verbindungsbolzens ortsfest in einem Möbelstückteil (2; 3) anzuordnen, vgl. Figur 7. An dem freien Ende dieser Bolzenbaugruppe (90) kann dann beispielsweise ein weiteres Möbelstückteil (3; 2), das eine zweite Bolzenhaltevorrichtung (120) aufweist, befestigt werden, vgl. Figur 8.

Die Bolzenhaltevorrichtung (20) hat eine zylinderförmige Hüllkontur. Die Hüllkontur ist hierbei die Kontur, die die am weitesten von der geometrischen Mittellinie (21) entfernt liegenden Punkte der Bolzenhaltevorrichtung (20) tangiert. Hierbei ist die Mittellinie (21) in der Längsrichtung (25) der Bolzenhaltevorrichtung (20) orientiert. Die Bolzenhaltevorrichtung (20) weist ein Mantelteil (22) und eine in diesem angeordnete Aufspreizkappe (51) auf. Die Aufspreizkappe (51) ist in den Figuren 1 - 3 und 5 mittels Tragstegen (52) mit dem Mantelteil (22) verbunden. Die beiden aneinander angeformten Teile (22, 51) sind im Ausführungsbeispiel aus demselben thermoplastischen Kunststoff, z.B. Polyamid, Polyoxymethylen (POM), etc. hergestellt. Es ist auch denkbar, für einzelne Bereiche der Bolzenhaltevorrichtung (20) unterschiedliche Werkstoffe einzusetzen.

Das Mantelteil (22) hat einen Führungsabschnitt (23), einen Halteabschnitt (26) und einen Spreizabschnitt (41). Diese drei Abschnitte (23, 26, 41) sind in der Längsrichtung (25) hintereinander angeordnet, wobei eine Einführöffnung (24) im Bereich des Führungsabschnitts (23) liegt. Die geometrische Mittellinie der Einführöffnung (24) fällt mit der Mittellinie (21) der Bolzenhaltevorrichtung (20) zusammen.

Der Führungsabschnitt (23) ist zylindrisch ausgebildet. Er hat einen über seine Länge konstanten Außendurchmesser, der im Ausführungsbeispiel dem Nenndurchmesser oder Nominaldurchmesser der Bolzenhaltevorrichtung (20) entspricht. Der Nenndurchmesser der in den Figuren 1 - 8 dargestellten Bolzenhaltevorrichtung (20) in einer Ebene normal zur Längsrichtung (25) beträgt 8 Millimeter. Die Länge der Bolzenhaltevorrichtung (20) beträgt z.B. das Anderthalbfache des Nenndurchmessers.

Der sich in der Einschubrichtung (61) an den Führungsabschnitt (23) anschließende Halteabschnitt (26) hat eine im Längsschnitt sägezahnförmig ausgebildete Außenfläche (27). Jeder der ringförmig ausgebildeten Sägezähne (28) wird begrenzt durch eine kegelmantelflächenförmig ausgebildete Gleitflanke (29) und eine z.B. normal zur Längsrichtung (25) orientierte Halteflanke (31). Die Halteflanke (31) zeigt hierbei entgegen der Bolzeneinschubrichtung (61). Der Durchmesser der zylinderförmig ausgebildeten Hüllfläche des Halteabschnitts (26) ist im Ausführungsbeispiel um 7 % größer als der Nenndurchmesser der Bolzenhaltevorrichtung (20). Die Länge des Halteabschnitts (26) beträgt im Ausführungsbeispiel die Hälfte des Nenndurchmessers.

Der Spreizabschnitt (41) grenzt in der Einschubrichtung (61) an den Halteabschnitt (26) an. Seine Länge beträgt beispielsweise 62 % des Nenndurchmessers. Der Spreizabschnitt (41) weist beispielsweise vier Spreizarme (42) auf, die in der Einschubrichtung (61) frei auskragen. In einer Stirnansicht der Bolzenhaltevorrichtung (20) überdecken sie jeweils ein Segment von 77 Grad. Zwischen den einzelnen Spreizarmen (42) ist jeweils ein Spalt (45) mit einer Breite von z.B. zwei Millimetern. Der einzelne Spreizarm (42) hat eine sägezahnförmige Außenfläche (43), die so orientiert ist wie die Außenfläche (27) des Halteabschnitts (26). Die Außenflächen (43) aller Spreizarme (42) tangieren im Ausgangszustand die Hüllkontur der Bolzenhaltevorrichtung (20).

Die die Spreizarm-Innenflächen (44) tangierende Innenhüllfläche des Spreizabschnitts (41) fluchtet mit der Innenseite (32) des Mantelteils (22). Der Durchmesser dieser z.B. innenzylinderförmigen Flächen beträgt beispielsweise 77 % des Nenndurchmessers. Die Wandstärke des einzelnen Spreizarms (42) - das ist der Abstand der Hüllkontur der Bolzenhaltevorrichtung (20) zur Innenwandung des Spreizabschnitts (41) beträgt im Ausführungsbeispiel 17,5 % des Nenndurchmessers.

An der Innenseite (32) sind im Ausführungsbeispiel im Bereich der Einführöffnung (24) entlang einer Kreisumfangslinie vier Rastelemente (33) angeordnet. Sie haben eine gemeinsame Mittenquerebene, die normal zur Längsrichtung (25) der Bolzenhaltevorrichtung (20) angeordnet ist. Die Rastelemente (33) bilden damit Segmente eines Innenrings. Jedes der regelmäßig angeordneten Segmente überdeckt beispielsweise einen Winkel von 45 Grad. Die einzelnen Rastelemente (33) haben einen konstanten, prismenförmigen Querschnitt. Der sich in Richtung der Mittellinie (21) verjüngende Keil des Prismas hat einen gedachten Spitzenwinkel von 45 Grad. Die in Richtung des Spreizabschnitts (41) zeigenden Halteflächen (34) der Rastelemente (33) schließen im Ausführungsbeispiel mit einer Normalenebene zur Längsrichtung (25) einen Winkel von 20 Grad ein. Dieser Winkel kann zwischen 0 Grad und 25 Grad betragen. Die in Richtung der Einführöffnung (24) zeigenden Einführflächen (35) der Rastelemente (33) schließen mit der Längsrichtung (25) einen Winkel zwischen 15 Grad und 75 Grad ein. Im Ausführungsbeispiel der Figuren 1 - 8 beträgt dieser Winkel 65 Grad. Die Innenflanken (36) der Rastelemente (33) begrenzen im Ausführungsbeispiel einen gedachten Innendurchmesser von 57 % des Nenndurchmessers.

An der Innenseite (32) ist weiterhin die Aufspreizkappe (51) mittels z.B. vier Trennstegen (52) befestigt. Diese Trennstege (52) sind als Abscherstege (52) ausgebildet. Sie sind quaderförmig ausgebildet, wobei jede Kantenlänge zwischen einem Zwanzigstel und einem Fünfungdzwanzigstel des Nenndurchmessers beträgt. Der Abstand der Aufspreizkappe (51) von der Innenseite (32) des Mantelteils (22) entspricht hierbei z.B. der kürzesten Kantenlänge des Quaders.

Die Aufspreizkappe (51) ist versetzt zu den Rastelementen (33) angeordnet, sodass die Rastelemente (33) zwischen der Aufspreizkappe (51) und der Einführöffnung (24) sitzen. Die Rastelemente (33) schneiden eine normal zur Längsrichtung (25) orientierte Ebene, die entgegen der Einschubrichtung (61) versetzt ist zu den Trennstegen (52). Die in der Längsrichtung (25) orientierte Länge der Bolzenhaltevorrichtung (20; 120), vermindert um die Länge der Aufspreizkappe (51) ist größer als der Abstand der in der Einschubrichtung (61) zeigenden Haltefläche (34) von der Einführöffnung (24).

Die Aufspreizkappe (51) ist im Ausführungsbeispiel topfförmig ausgebildet. Sie hat eine entgegen der Einschubrichtung (61) zeigende Aufnahmeeinsenkung (54) und einen in der Einschubrichtung (61) die Aufnahmeeinsenkung (54) verschließenden Deckel (55). Der Durchmesser der zylindrisch ausgebildeten Aufnahmeeinsenkung (54) beträgt z.B. 37,5 % des Nenndurchmessers. Zwischen den beispielsweise parallel zur Längsrichtung (25) orientierten z.B. vier Mantelflächenabschnitten (53) sind Ausnehmungen (56) angeordnet. Der Durchmesser der Aufspreizkappen-Hüllkontur beträgt 70 % des Nenndurchmessers der Bolzenhaltevorrichtung (20). Die Aufspreizkappen-Hüllkontur ist die zylindrische Kontur mit kreisförmigem Querschnitt, die die Mantelflächenabschnitte (53) der Aufspreizkappe (51) tangiert.

Die Ausnehmungen (56) fluchten mit den Rastelementen (33) und mit den Spalten (45) zwischen den Spreizarmen (42). Somit liegen die Mantelflächenabschnitte (53) im gleichen Sektor der Hüllkontur der Bolzenhaltevorrichtung (20) wie die Spreizarme (42). Die Länge der Aufspreizkappe (51) in der Längsrichtung (25) entspricht im Ausführungsbeispiel 62,5 % des Nenndurchmessers.

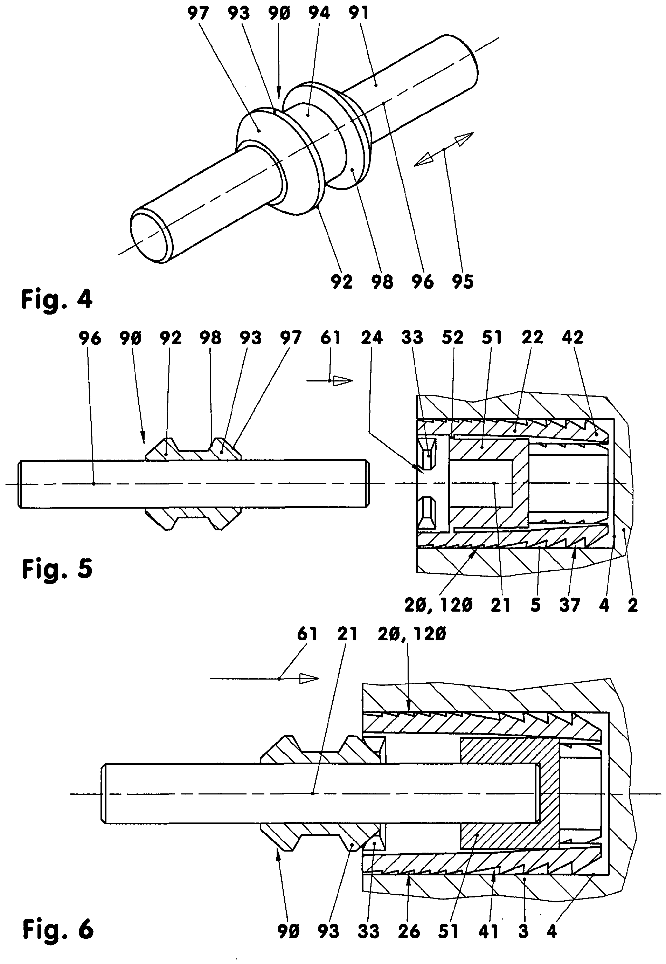

In den Figuren 4 und 5 ist eine Bolzenbaugruppe (90) dargestellt. Sie besteht aus einem Bolzen (91) und einem Verrastungsformteil (92). Der Bolzen (91) ist zylindrisch und kerbfrei ausgebildet. Sein Durchmesser beträgt z.B. 37,5 % des Nenndurchmessers und seine Länge entspricht im Ausführungsbeispiel dem 2,75-fachen des Nenndurchmessers. Der Bolzen (91) ist im Ausführungsbeispiel aus einem Stahlwerkstoff hergestellt. Er kann jedoch auch aus einem Kunststoff hergestellt sein.

Das Verrastungsformteil (92) ist fest mit dem Bolzen (91) verbunden. Beispielsweise ist es auf diesen aufgepresst oder aufgespritzt. Es besteht beispielsweise aus einem elastisch verformbaren thermoplastischen Werkstoff und sitzt in der Bolzenbaugruppenlängsrichtung (95) mittig auf dem Bolzen (91). Seine Länge beträgt z.B. 75 % des Nenndurchmessers der Bolzenhaltevorrichtung (20). Der maximale Durchmesser des Verrastungsformteils (92) beträgt im Ausführungsbeispiel 72,5 % des Nenndurchmessers. Das Verrastungsformteil (92) ist rotationssysmmetrisch zur Mittellinie (96) der Bolzenbaugruppe (90) und achsensymmetrisch zu einer normal zur Mittellinie (96) orientierten Mittenquerebene ausgebildet.

In den Darstellungen der Figuren 4 und 5 hat das Verrastungsformteil (92) zwei umlaufende, im Längsschnitt prismenförmige Verrastungsringe (93). Jeder dieser Verrastungsringe (93) hat in der Richtung der Mittellinie (96) außenliegende, kegelstumpfförmig ausgebildete Einführflächen (97) und zwei innenliegende, ebenfalls kegelstumpfförmig ausgebildete Rastflächen (98). Der Spitzenwinkel des Einführkegels (97) beträgt jeweils z.B. 85 Grad, wobei die Kegelspitze jeweils außerhalb des Verrastungsformteils (92) auf der Mittellinie (96) liegt.

Die beiden Rastkegel (98) haben jeweils einen Spitzenwinkel von z.B. 120 Grad. Die gedachte Kegelspitze liegt jeweils auf der Mittellinie (96) in der Nähe des Schnittpunkts mit der genannten Mittenquerebene.

Zwischen den Rastflächen (98) hat das Verrastungsformteil (92) einen z.B. zylindrisch ausgebildeten Bundabschnitt (94). Der Durchmesser dieses Bundabschnitts (94) beträgt im Ausführungsbeispiel 50 % des Nenndurchmessers der Bolzenhaltevorrichtung (20). Die Länge des in den Figuren 4 und 5 dargestellten Bundabschnitts (94) entspricht beispielsweise dem Nenndurchmesser.

Die Bolzenbaugruppe (90) kann auch derart ausgebildet sein, dass der Bolzen (91) und das Verrastungsformteil (92) z.B. in einem gemeinsamen Spritzgussverfahren hergestellt werden. Das Verrastungsformteil (92) ist dann an den Bolzen (91) angeformt. Hierbei können der Bolzen (91) und das Verrastungsformteil (92) aus dem gleichen oder aus unterschiedlichen Werkstoffen bestehen. Im letztgenannten Fall kann die Bolzenbaugruppe (90) beispielsweise als Bolzenformteil z.B. in einem Zwei-Komponenten-Verfahren hergestellt werden. Es ist aber auch denkbar, die gesamte Bolzenbaugruppe (90) oder das Bolzenformteil aus einem metallischen Werkstoff, z.B. Stahl herzustellen.

Vor der Montage eines Möbelstücks (1) wird beispielsweise bereits beim Möbelhersteller die Bolzenhaltevorrichtung (20; 120) in eine Sacklochbohrung (4) eines Möbelstückteils (2; 3) eingesetzt, vgl. Figur 5. Dies kann werkzeuglos oder mit meinem Werkzeug erfolgen. Der Durchmesser der Sacklochbohrung (4) ist beispielsweise um 2,5 % größer als der Nenndurchmesser der Bolzenhaltevorrichtung (20; 120). Die Tiefe der Sacklochbohrung (4) entspricht im Ausführungsbeispiel mindestens der Länge der Bolzenhaltevorrichtung (20; 120). In alle Möbelstückteile (2, 3) werden beispielsweise identische Sacklochbohrungen (4) eingebracht, in die identisch ausgebildete Bolzenhaltevorrichtungen (20; 120) eingesetzt werden. Die minimale Plattendicke des Möbelstückteils (2; 3) ist z.B. um 87,5 % größer als der Nenndurchmesser der Bolzenhaltevorrichtung (20; 120).

Die Figur 5 zeigt das Möbelstückteil (2; 3) mit darin eingesetzter Bolzenhaltevorrichtung (20). Sowohl der Halteabschnitt (26) als auch der Spreizabschnitt (41) sind elastisch verformt, sodass die Gleitflanken (29) an der Sacklochbohrung (4) anliegen. Die Spreizarme (42) sind in Richtung des Innenraums (37) der Bolzenhaltevorrichtung (20) abgelenkt. Die Aufspreizkappe (51) ist unverändert im Mantelteil (22) der Bolzenhaltevorrichtung (20) fixiert.

Nun kann die Bolzenbaugruppe (90) in der Bolzeneinschubrichtung (61) in die Bolzenhaltevorrichtung (20) eingesetzt werden. Hierzu wird die Bolzenbaugruppe (90) so relativ zur Bolzenhaltevorrichtung (20) ausgerichtet, dass die Mittellinie (96) der Bolzenbaugruppe (90) mit der Mittellinie (21) der Bolzenhaltevorrichtung (20) zusammenfällt.

Beim maschinellen oder manuellen Einschieben der Bolzenbaugruppe (90) in die Bolzenhaltevorrichtung (20) wird der Bolzen (91) durch die Einführöffnung (24) hindurch in die Aufnahmeausnehmung (54) der Aufspreizkappe (51) eingeschoben. Hierbei ist zunächst kein Widerstand spürbar. Der Bolzen (91) trifft auf den Deckel (55) der Aufspreizkappe (51). Beim weiteren Einschieben der Bolzenbaugruppe (90) wird die Aufspreizkappe (51) vom Mantelteil (22) abgetrennt. Beispielsweise werden die Trennstege (52) abgeschert. Die Bolzenbaugruppe (90) verschiebt nun beim weiteren Einschieben die Aufspreizkappe (51) relativ zum Mantelteil (22) in der Einschubrichtung (61), vgl. Figur 6.

Die in der Einschubrichtung (61) vorne liegende Einführkegel (97) der Bolzenbaugruppe (90) stößt beim weiteren Einschieben an die Einführschrägen (35) der Rastelemente (33). Die Rastelemente (33) und/oder das Verrastungsformteil (92) werden elastisch verformt. Der in der Einschubrichtung (61) vorne liegende Ring (93) wird in der Einschubrichtung (61) verschoben, bis der Rastkegel (98) die Rastelemente (33) schlagartig hintergreift, vgl. Figur 7. Beim - spür- und hörbaren - Rückverformen der Rastelemente (33) und/oder des Verrastungsrings (93) gleiten der Rastkegel (98) und die Halteflächen (34) aneinander ab. Die Bolzenbaugruppe (90) wird relativ zur Bolzenhaltevorrichtung (20) in die Endposition gezogen. Der Rastkegel (98) der Bolzenbaugruppe (90) liegt nun an den Halteflächen (34) der Rastelemente (33) an. Die Bolzenbaugruppe (90) ist gegen ein Ausziehen unlösbar gesichert. Die Bolzenhaltevorrichtung (20) ist in der Längsrichtung (25) vorgespannt.

Beim Einschieben der Bolzenbaugruppe (90) kontaktiert die Aufspreizkappe (51) die Spreizarme (42) des Mantelteils (22). Die Spreizarme (42) werden radial nach außen gepresst und drücken gegen die Wandung (5) der Sacklochbohrung (4). Hierbei werden die Spreizarme (42) verformt. Die Bolzenhaltevorrichtung (20) ist damit sicher und unlösbar in der Sacklochbohrung (4) gehalten.

Die Figur 8 zeigt ein Möbelstück (1) mit zwei miteinander verbundenen Möbelstückteilen (2, 3). In jedem Möbelstückteil (2; 3) ist in einer Sacklochbohrung (4) eine Bolzenhaltevorrichtung (20; 120) eingesetzt, die so aufgebaut ist wie die in den Figuren 1 - 7 beschriebene Bolzenhaltevorrichtung (20; 120). In das System mit den zwei Bolzenhaltevorrichtungen (20; 120) wird - beispielsweise von dem das Möbelstück (1) zusammenbauenden Endkunden - die Bolzenbaugruppe (90) eingesetzt. Sie kann zunächst einseitig in die Bolzenhaltevorrichtung (20; 120) eines ersten Möbelstückteils (2; 3) eingesetzt werden. Hierauf wird das zweite Möbelstückteil (3; 2) so angesetzt, dass die Mittellinien (21) beider Bolzenhaltevorrichtungen (20; 120) miteinander fluchten. Die Bolzenbaugruppe (90) kann auch in beide Möbelstückteile (2; 3) zunächst lose eingesetzt werden. Beim Zusammendrücken beider Möbelstückteile (2, 3) verrastet die Bolzenbaugruppe (90) in beiden Bolzenhaltevorrichtungen (20, 120), wobei die Möbelstückteile (2, 3) zur gegenseitigen spaltfreien Anlage gezogen werden. Die beiden Möbelstückteile (2, 3) sind nun mittels eines Verbindungssystems (10) unlösbar miteinander verbunden. Nach der Montage sind sowohl die Bolzenhaltevorrichtungen (20, 120) als auch die Bolzenbaugruppe (90) unsichtbar. Der Zusammenbau eines Möbelkorpus kann somit werkzeuglos schnell und problemlos erfolgen.

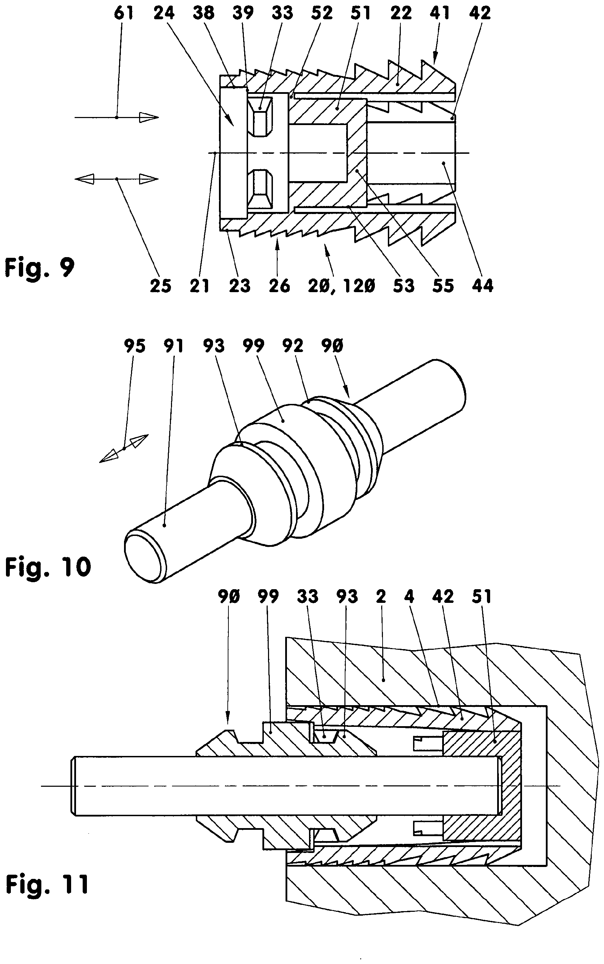

In der Figur 9 ist eine weitere Ausführungsform einer Bolzenhaltevorrichtung (20; 120) dargestellt. Der Durchmesser der Hüllkontur der Bolzenhaltevorrichtung (20; 120) - er entspricht auch in diesem Fall dem Durchmesser der Hüllkontur des Spreizabschnitts (41) - ist in diesem Ausführungsbeispiel um 20 % größer als der Nenndurchmesser der Bolzenhaltevorrichtung (20; 120). Der Durchmesser der Hüllkontur des Halteabschnitts (26) entspricht dem Durchmesser der Hüllkontur des Halteabschnitts (26) des ersten Ausführungsbeispiels.

Die Einführöffnung (24) hat eine Aufweitung (38), deren Durchmesser 85 % des Nenndurchmessers beträgt. Die Tiefe der Aufweitung (38) in der Längsrichtung (25) beträgt z.B. 17 % des Nenndurchmessers. Die Anlagefläche (39) der Aufweitung (38) ist normal zur Längsrichtung (25) orientiert. Die Rastelemente (33) sind zwischen der Aufweitung (38) und der Aufspreizkappe (51) angeordnet. Der Durchmesser der Aufspreizkappen-Hüllkontur und der Innendurchmesser des Mantelteils (22) haben in diesem Ausführungsbeispiel die gleichen Maße wie die entsprechenden Abmessungen des ersten Ausführungsbeispiels.

Die Figur 10 zeigt eine Bolzenbaugruppe (90) für die in der Figur 9 dargestellte Bolzenhaltevorrichtung (20). Sie umfasst einen Bolzen (91) mit einem darauf aufgespritzen Verrastungsformteil (92). Die Werkstoffe der Komponenten der Bolzenbaugruppe (90) entsprechen den Werkstoffen der entsprechenden Komponenten der in den Figuren 4 und 5 dargestellten Bolzenbaugruppe (90).

Das Verrastungsformteil (92) hat zwei Verrastungsringe (93), die beispielsweise einen Einführkegel (97) mit einem kleineren Kegelwinkel aufweisen als die Verrastungsringe (93) des ersten Ausführungsbeispiels. Zwischen den beiden
Verrastungsringen (93) ist mittig ein Anschlagbund (99) angeordnet. Der Durchmesser dieses Anschlagbunds (99) beträgt beispielsweise 81 % des Nenndurchmessers, seine in Bolzenbaugruppenlängsrichtung (95) orientierte Länge beträgt 30 % des Nenndurchmessers.

Das Einsetzen der Bolzenbaugruppe (90) in die Bolzenhaltevorrichtung (20) erfolgt, wie im Zusammenhang mit dem ersten Ausführungsbeispiel beschrieben. Der Bolzen (91) verschiebt nach dem Abscheren der Trennstege (52) die Aufspreizkappe (51), die den Spreizbereich (41) an die Aufnahmeausnehmung (4) des Möbelstückteils (2; 3) anpresst, vgl. Figur 11. Sobald der Rastkegel (98) die Rastelemente (33) hintergreift, ist die Bolzenbaugruppe (90) gehalten. Zusätzlich liegt der Anschlagbund (99) in der Aufweitung (38). Er verhindert damit ein zu weites Einschieben der Bolzenbaugruppe (90) in die Bolzenhaltevorrichtung (20). Außerdem zentriert der Anschlagbund (99) die Bolzenbaugruppe (90) relativ zur Bolzenhaltevorrichtung (20). Diese Einpresssicherung erleichtert damit die nachfolgende Montage des zweiten Möbelstückteils (3; 2). Die in der Figur 9 dargestellte Bolzenhaltevorrichtung (20) ist auch mit der in der Figur 4 dargestellten Bolzenbaugruppe (90) kombinierbar.

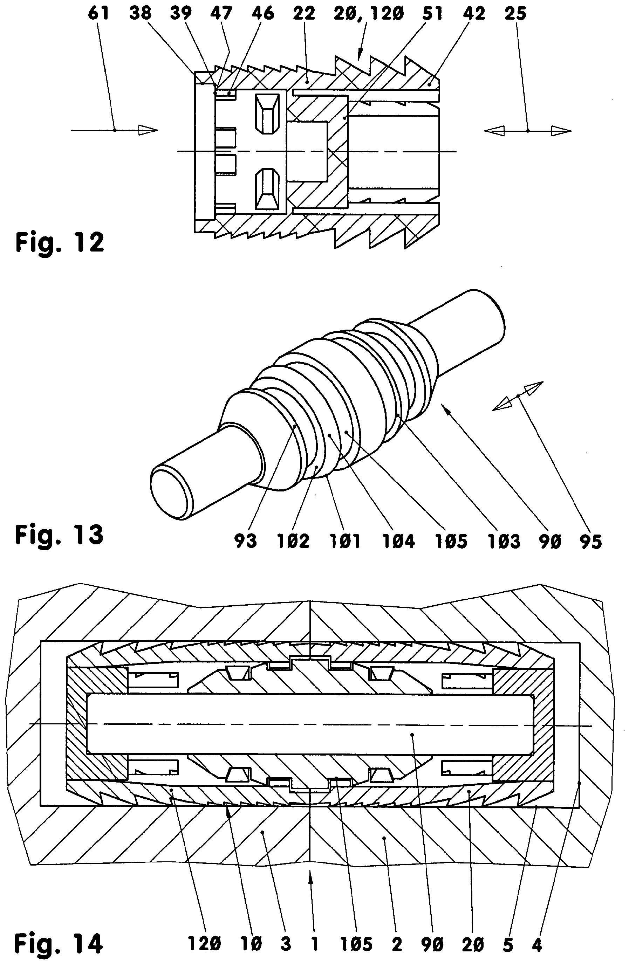

In der Figur 12 ist ein weiteres Beispiel einer Bolzenhaltevorrichtung (20; 120) dargestellt. Diese Bolzenhaltevorrichtung (20; 120) hat die gleiche Länge wie die im Zusammenhang mit den vorhergehenden Ausführungsbeispielen beschriebenen Bolzenhaltevorrichtungen (20). Auch der Durchmesser der Aufspreizkappen-Hüllkontur und der Innendurchmesser des Mantelteils (22) entsprechen den entsprechenden Abmessungen der anderen Ausführungsbeispiele.

Der Durchmesser der Hüllkontur der Bolzenhaltevorrichtung (20) ist in diesem Ausführungsbeispiel um 20 % größer als der Nenndurchmesser. Der Durchmesser des Halteabschnitts (26) entspricht dem Durchmesser der Halteabschnitte (26) der anderen Ausführungsbeispiele.

An der Einführöffnung (24) ist eine Aufweitung (38) ausgebildet, die so ausgebildet ist wie die in der Figur 9 dargestellte Aufweitung (38). Zwischen der Aufweitung (38) und den Rastelementen (33) sind an der Innenseite (32) Halteblöcke (46) angeordnet. Hierbei sind die entgegen der Einschubrichtung (61) orientierten Stirnseiten (47) der Halteböcke (46) bündig mit der Anlagefläche (39) der Aufweitung (38). In dem in der Figur 12 dargestellten Längsschnitt haben sie eine rechteckige Fläche. Die von den Halteblöcken (46) begrenzte, normal zur Mittellinie (21) orientierte Kreisfläche hat einen größeren Durchmesser als die parallel hierzu liegende, von den Rastelementen (33) begrenzte Kreisfläche. Im Ausführungsbeispiel beträgt der Durchmesser der von den Halteböcken (46) begrenzten Fläche 70 % des Nenndurchmessers.

Die Figur 13 zeigt eine Bolzenbaugruppe (90) zum Einsatz in die Bolzenhaltevorrichtung (20; 120) der Figur 12. Der zylindrische Bolzen (91) ist so ausgebildet wie im Zusammenhang mit den anderen Ausführungsbeispielen beschrieben. Das Verrastungsformteil (92) hat Verrastungsringe (93), einen Anschlagbund (99) und zwei Sicherungsringe (101). Die Verrastungsringe (93) haben in diesem Ausführungsbeispiel einen Einführkegel (97) mit einem Spitzenwinkel von 67 Grad. Der jeweilige Rastkegel (98) hat einen gedachten Spitzenwinkel von 140 Grad. Der Außendurchmesser der Verrastungsringe (93) ist kleiner als der Durchmesser eines von den Innenflächen der Halteblöcke (46) begrenzten Kreises.

Der einzelne Sicherungsring (101) ist jeweils zwischen dem Verrastungsring (93) und dem Anschlagbund (99) angeordnet. Er hat zwei parallel zueinander angeordnete Stirnflächen (102, 103), von denen die eine in Richtung des Verrastungsrings (93) und die andere in Richtung des Anschlagbunds (99) zeigt. Die beiden Stirnflächen (102, 103) sind beispielsweise mittels einer kegelstumpfförmig ausgebildeten Gleitfläche (104) verbunden. Der gedachte Spitzenwinkel dieser Gleitfläche (104) beträgt im Ausführungsbeispiel 40 Grad. Diese gedachte Spitze liegt auf der Mittellinie (96) der Bolzenbaugruppe (90) außerhalb des Verrastungsformteils (92). Der Außendurchmesser des Sicherungsrings (101) ist größer als der Durchmesser eines von den Rastelementen (33) begrenzten Kreises und kleiner als der Durchmesser der Innenseite (32) des Mantelteils (22). Die genannten Durchmesser liegen jeweils in normal zu den Längsrichtungen (25, 95) orientierten Ebenen.

Das Einsetzen der Bolzenbaugruppe (90) in die Bolzenhaltevorrichtung (20) erfolgt, wie im Zusammenhang mit den anderen Ausführungsbeispielen beschrieben. Hierbei verschiebt die Bolzenbaugruppe (90) die Aufspreizkappe (51) nach dem Abtrennen der Abscherstege (52) in der Einführrichtung (61) relativ zum Mantelteil (22). Die Aufspreizkappe (51) presst die Spreizarme (42) gegen die Wandung (5) der Sacklochbohrung (4). Die Bolzenhaltevorrichtung (20; 120) ist damit sicher gehalten. Während des Einschiebens der Bolzenbaugruppe (90) gleitet die Gleitfläche (104) entlang der Halteblöcke (46), bis die in der Einschubrichtung (61) hintere Stirnfläche (103) hinter den Halteblöcken (46) verrastet. Die hintere Stirnfläche (103) und der Anschlagbund (99) begrenzen damit eine Blockierausnehmung (105). Mittels dieser Auszugssicherung ist die Bolzenbaugruppe (90) zusätzlich in der Bolzenhaltevorrichtung (20; 120) gesichert. In die Bolzenhaltevorrichtung (20; 120) nach Figur 12 können auch die in den Figuren 4 und 10 dargestellten Bolzenbaugruppen (90) eingesetzt werden. Beispielsweise nach dem Einsetzen einer Bolzenhaltevorrichtung (20; 120) in ein zweites Möbelstückteil (3; 2) kann das System mit zwei Bolzenhaltevorrichtungen (20) und einer Bolzenbaugruppe (90) gefügt werden. Es bildet nach dem Fügen ein Verbindungssystem (10) zum Verbinden beider Möbelstückteile (2, 3).

Die Figur 14 zeigt zwei Möbelstückteile (2, 3), die mittels eines Verbindungssystems (10) miteinander verbunden sind. Das hier dargestellte Verbindungssystem (10) umfasst zwei Bolzenhaltevorrichtungen (20; 120) nach Figur 12, die jeweils in eines der Möbelstücksteile (2; 3) eingesetzt sind. Eine Bolzenbaugruppe (90) nach Figur 13 ist in beiden z.B. identischen Bolzenhaltevorrichtungen (20; 120) verrastet, sodass das eine Ende der Bolzenbaugruppe (90) in der ersten und das andere Ende in der zweiten Bolzenhaltevorrichtung (20; 120) gesichert gehalten ist. Auch in diesem Ausführungsbeispiel werden die Bolzenhaltevorrichtungen (20; 120) bereits vom Möbelhersteller in die Möbelstückteile (2, 3) eingesetzt. Der Endkunde, der das Möbel (1) zusammenbaut, setzt dann die Bolzenbaugruppe (90) in die Bolzenhaltevorrichtungen (20) und fügt z.B. werkzeuglos die beiden Möbelstückteile (2, 3) miteinander.

Auch Kombinationen der einzelnen Ausführungsbeispiele sind denkbar.

### Bezugszeichenliste:

- 1: Möbelstück
- 2: Möbelstückteil
- 3: Möbelstückteil
- 4: Sacklochbohrung, Aufnahmeausnehmung
- 5: Wandung von (4)
- 10: Verbindungssystem
- 20: Bolzenhaltevorrichtung
- 21: Mittellinie
- 22: Mantelteil, Dübelteil
- 23: Führungsabschnitt
- 24: Einführöffnung
- 25: Längsrichtung
- 26: Halteabschnitt
- 27: Außenfläche
- 28: Sägezähne
- 29: Gleitflanke
- 31: Halteflanke
- 32: Innenseite
- 33: Rastelemente
- 34: Haltefläche
- 35: Einführfläche, Einführschrägen
- 36: Innenflanken
- 37: Innenraum
- 38: Aufweitung
- 39: Anlagefläche
- 41: Spreizabschnitt
- 42: Spreizarme
- 43: Außenfläche
- 44: Spreizarm-Innenflächen
- 45: Spalte
- 46: Halteblöcke
- 47: Stirnseite
- 51: Aufspreizkappe
- 52: Tragstege, Abscherstege, Trennstege
- 53: Mantelflächenabschnitte
- 54: Aufnahmeeinsenkung, Aufnahmeausnehmung
- 55: Deckel
- 56: Ausnehmungen
- 61: Einschubrichtung
- 90: Bolzenbaugruppe
- 91: Bolzen
- 92: Verrastungsformteil
- 93: Ringe, prismenförmig, Verrastungsringe
- 94: Bundabschnitt
- 95: Bolzenbaugruppenlängsrichtung
- 96: Mittellinie von (90)
- 97: Einführflächen, Einführkegel
- 98: Rastflächen, Rastkegel
- 99: Anschlagbund
- 101: Sicherungsringe
- 102: Stirnfläche
- 103: Stirnfläche
- 104: Gleitfläche
- 105: Blockierausnehmung
- 120: Bolzenhaltevorrichtung

## Patentansprüche

1. Bolzenhaltevorrichtung (20; 120) mit einer zylinderförmigen Vorrichtungs-Hüllkontur, deren Durchmesser größer ist als der Nenndurchmesser der Bolzenhaltevorrichtung (20; 120), die zumindest einen Halteabschnitt (26) und einen hierzu in der Längsrichtung (25) der Bolzenhaltevorrichtung (20; 120) versetzten, mindestens einen, die Vorrichtungs-Hüllkontur tangierenden Spreizarm (42) aufweisenden Spreizabschnitt (41) umfasst, **dadurch gekennzeichnet,**
**dass** die Bolzenhaltevorrichtung (20; 120) ein Mantelteil (22) und eine an dessen Innenseite (32) mittels Trennstegen (52) angeformte Aufspreizkappe (51) mit einer Aufspreizkappen-Hüllkontur aufweist,
**dass** die Aufspreizkappe (51) eine in einer vom Halteabschnitt (26) in Richtung des Spreizabschnitts (41) orientierten Einschubrichtung (61) mittels eines Deckels (55) begrenzte Aufnahmeausnehmung (54) umfasst, dass der Nenndurchmesser der Bolzenhaltevorrichtung (20; 120), verringert um die doppelte Wandstärke des Spreizabschnitts (41), kleiner ist als der Außendurchmesser der Aufspreizkappen-Hüllkontur,
**dass** das Mantelteil (22) an seiner Innenseite (32) mindestens ein Rastelement (33) aufweist und
**dass** die in der Längsrichtung (25) orientierte Länge der Bolzenhaltevorrichtung (20; 120), vermindert um die Länge der Aufspreizkappe (51), größer ist als der Abstand einer in der Einschubrichtung (61) orientierten Haltefläche (34) des Rastelements (33) von einer Einführöffnung (24) der Bolzenhaltevorrichtung (20; 120).

2. Bolzenhaltevorrichtung (20; 120) nach Anspruch 1, **dadurch gekennzeichnet, dass** der Durchmesser der Vorrichtungs-Hüllkontur zwischen 10 % und 25 % größer ist als der Nenndurchmesser der Bolzenhaltevorrichtung (20; 120).

3. Bolzenhaltevorrichtung (20; 120) nach Anspruch 1, **dadurch gekennzeichnet, dass** die Innenseite (32) des Mantelteils (22) mit der Spreizarm-Innenfläche (44) des mindestens einen Spreizarms (42) fluchtet.

4. Bolzenhaltevorrichtung (20; 120) nach Anspruch 1, **dadurch gekennzeichnet, dass** das mindestens eine Rastelement (33) elastisch verformbar ausgebildet ist.

5. Bolzenhaltevorrichtung (20; 120) nach Anspruch 1, **dadurch gekennzeichnet, dass** die in Richtung des Spreizabschnitts (41) orientierte Haltefläche (34) des Rastelements (33) mit einer Normalenebene zur Längsrichtung (25) einen Winkel einschließt, der kleiner ist als 25 Grad.

6. System mit zwei Bolzenhaltevorrichtungen (20, 120) nach Anspruch 1 und mit einer Bolzenbaugruppe (90) oder einem Bolzenformteil, **dadurch gekennzeichnet,**
**dass** die jeweiligen Spreizabschnitte (41) in entgegengesetzte Richtungen orientiert sind,
**dass** die Bolzenbaugruppe (90) oder das Bolzenformteil ein mittig angeordnetes Verrastungsformteil (92) aufweist und
**dass** zur Bildung eines Verbindungssystems (10) die Bolzenbaugruppe (90) oder das Bolzenformteil in beide Bolzenhaltevorrichtungen (20, 120) einsetzbar und fixierbar ist.

7. System nach Anspruch 6, **dadurch gekennzeichnet, dass** das Verrastungsformteil (92) einen Anschlagbund (99) aufweist, dessen Außendurchmesser größer ist als der Durchmesser der Innenseite (32).

8. System nach Anspruch 6, **dadurch gekennzeichnet,**
**dass** an der Innenseite (32) Blockierelemente (46) angeordnet sind und
**dass** das Verrastungsformteil (92) eine Blockierausnehmung (105) aufweist.

9. Möbelstück (1) mit zwei aneinander angrenzenden Möbelstückteilen (2, 3), wobei in jedem Möbelstückteil (2, 3) eine Bolzenhaltevorrichtung (20; 120) eingesetzt ist, **dadurch gekennzeichnet, dass** die Möbelstückteile (2, 3) mittels eines Systems nach Anspruch 7 mit beidseitig verrasteter Bolzenbaugruppe (90) oder eines Bolzenformteils verbunden sind.

## Claims

1. A bolt holding device (20; 120) having a cylindrical device enveloping contour, the diameter of which is larger than the nominal diameter of the bolt holding device (20; 120), which comprises at least one holding section (26). and a spreading section (41), offset thereto in the longitudinal direction (25) of the bolt holding device (20; 120), and having at least one spreading arm (42) tangential to the device enveloping contour, **characterized**
- **in that** the bolt holding device (20; 120) has a casing part (22) and a spreading cap (51) moulded onto the inner side (32) thereof by means of separating webs (52), having a spreading-cap enveloping contour,
- **in that** the spreading cap (51) comprises an accommodating recess (54) delimited by means of a lid (55) in an insertion direction (61) orientated from the holding section (26) in the direction of the spreading section (41), in that the nominal diameter of the bolt holding device (20; 120), reduced by the double wall thickness of the spreading section (41), is smaller than the outer diameter of the spreading-cap enveloping contour,
- **in that** the casing part (22) has at least one latching element (33) on its inner side (32) and
- **in that** the length of the bolt holding device (20; 120) orientated in the longitudinal direction (25), reduced by the length of the spreading cap (51), is larger than the distance of a holding surface (34) of the latching element (33), orientated in the insertion direction (61), from an insertion opening (24) of the bolt holding device (20; 120).

2. The bolt holding device (20; 120) according to Claim 1, **characterized in that** the diameter of the device enveloping contour is between 10 % and 25 % larger than the nominal diameter of the bolt holding device (20; 120).

3. The bolt holding device (20; 120) according to Claim 1, **characterized in that** the inner side (32) of the casing part (22) is flush to the spreading arm inner surface (44) of the at least one spreading arm (42).

4. The bolt holding device (20; 120) according to Claim 1, **characterized in that** the at least one latching element (33) is constructed in an elastically deformable manner.

5. The bolt holding device (20; 120) according to Claim 1, **characterized in that** the holding surface (34) of the latching element (33) orientated in the direction of the spreading section (41) encloses an angle, which is smaller than 25 degrees, with a normal plane to the longitudinal direction (25).

6. A system having two bolt holding devices (20, 120) according to Claim 1 and having a bolt subassembly (90) or a shaped bolt part, **characterized**
- **in that** the respective spreading sections (41) are orientated in opposite directions,
- **in that** the bolt subassembly (90) or the shaped bolt part has a centrally arranged shaped latching part (92), and
- **in that**, to form a connecting system (10), the bolt subassembly (90) or the shaped bolt part can be inserted and fixed in both bolt holding devices (20, 120) .

7. The system according to Claim 6, **characterized in that** the shaped latching part (92) has a stop collar (99), the outer diameter of which is larger than the diameter of the inner side (32).

8. The system according to Claim 6, **characterized**
- **in that** locking elements (46) are arranged on the inner side (32), and
- **in that** the shaped latching part (92) has a locking recess (105).

9. A piece of furniture (1) having two mutually adjacent parts of a piece of furniture (2, 3), wherein a bolt holding device (20; 120) is inserted in each part of a piece of furniture (2, 3), **characterized in that** the parts of a piece of furniture (2, 3) are connected to the bolt subassembly (90), latched on both sides, or a shaped bolt part by means of a system according to Claim 7.

## Revendications

1. Dispositif de blocage de boulon (20 ; 120) pourvu d'un contour d'enveloppe de dispositif de forme cylindrique, dont le diamètre est supérieur au diamètre nominal du dispositif de blocage de boulon (20 ; 120), qui comprend au moins un tronçon de retenue (26) et un tronçon d'expansion (41) décalé par rapport à celui-ci dans la direction longitudinale (25) du dispositif de blocage de boulon (20 ; 120) comportant au moins un bras d'expansion (42) effleurant le contour d'enveloppe de dispositif, **caractérisé**
- **en ce que** le dispositif de blocage de boulon (20 ; 120) comporte une partie d'enveloppe (22) et un capuchon d'expansion (51) surmoulé sur la face intérieure (32) de celle-ci au moyen de barrettes de séparation (52), pourvu d'un contour d'enveloppe de capuchon d'expansion,
- **en ce que** le capuchon d'expansion (51) comprend un évidement de réception (54) délimité dans une direction d'insertion (61) orientée à partir du tronçon de retenue (26) dans la direction du tronçon d'expansion (41) au moyen d'un couvercle (55),
- **en ce que** le diamètre nominal du dispositif de blocage de boulon (20 ; 120), réduit de la double épaisseur de paroi du tronçon d'expansion (41) est inférieur au diamètre extérieur du contour d'enveloppe de capuchon d'expansion,
- **en ce que** la partie d'enveloppe (22) comporte sur sa face intérieure (32) au moins un élément d'enclenchement (33) et
- **en ce que** la longueur du dispositif de blocage de boulon (20 ; 120), orientée dans la direction longitudinale (25), réduite de la longueur du capuchon d'expansion (51) est supérieure à l'écart entre une surface de retenue (34) de l'élément d'enclenchement (33), orientée dans la direction d'insertion (61) et un orifice d'introduction (24) du dispositif de blocage de boulon (20 ; 120).

2. Dispositif de blocage de boulon (20 ; 120) selon la revendication 1, **caractérisé en ce que** le diamètre du contour d'enveloppe de dispositif est supérieur de 10 % à 25 % au diamètre nominal du dispositif de blocage de boulon (20 ; 120).

3. Dispositif de blocage de boulon (20 ; 120) selon la revendication 1, **caractérisé en ce que** la face intérieure (32) de la partie d'enveloppe (22) est alignée sur la surface intérieure de bras d'expansion (44) de l'au moins un bras d'expansion (42).

4. Dispositif de blocage de boulon (20 ; 120) selon la revendication 1, caractérisé en ce l'au moins un élément d'enclenchement (33) est conçu en étant élastiquement déformable.

5. Dispositif de blocage de boulon (20 ; 120) selon la revendication. 1, **caractérisé en ce que** la surface de retenue (34) de l'élément d'enclenchement (33) orientée dans la direction du tronçon d'expansion (41) inclut avec un plan normal par rapport à la direction longitudinale (25) un angle qui est inférieur à 25 degrés.

6. Système, pourvu de deux dispositifs de blocage de boulon (20, 120) selon la revendication 1 et d'un ensemble de boulon (90) ou d'une pièce moulée en boulon, **caractérisé**
- **en ce que** les tronçons d'expansion (41) respectifs sont orientés dans des directions opposées,
- **en ce que** l'ensemble de boulon (90) ou la pièce moulée en boulon comporte une pièce moulée d'enclenchement (92) placée au centre, et
- **en ce que** pour créer un système d'assemblage (10), l'ensemble de boulon (90) ou la pièce moulée en boulon est susceptible d'être inséré (e) et fixé(e) dans les deux dispositifs de blocage de boulon (20, 120).

7. Système selon la revendication 6, **caractérisé en ce que** la pièce moulée d'enclenchement (92) comporte un collet de butée (99), dont le diamètre extérieur est supérieur au diamètre de la face intérieure (32).

8. Système selon la revendication 6, **caractérisé**
- **en ce que** sur la face intérieure (32) sont placés des éléments de blocage (46) et
- **en ce que** la pièce moulée de blocage (92) comporte un évidement de blocage (105).

9. Meuble (1), pourvu de deux pièces de meuble (2, 3) adjacentes, dans chaque pièce de meuble (2, 3) étant inséré un dispositif de blocage de boulon (20 ; 120), **caractérisé en ce que** les pièces de meuble (2, 3) sont assemblées au moyen d'un système selon la revendication 7, pourvu d'un ensemble de boulon (90) enclenché de part et d'autre ou d'une pièce moulée en boulon.
